# EUROPÄISCHE PATENTANMELDUNG

(11) **EP 1 454 733 A1**
(43) Veröffentlichungstag der Anmeldung: **08.09.2004**
(21) Anmeldenummer: 03002272.7
(22) Anmeldetag: 01.02.2003
(51) Int. Cl.: B29C 47/08, B30B 11/24

(54) **Extrudiervorrichtung**

(71) Anmelder: Reifenhäuser GmbH & Co. Maschinenfabrik, 53839 Troisdorf (DE)
(72) Erfinder: Winkler, Reinhold, 53773 Hennef (DE); Thewes, Dieter, 53842 Troisdorf (DE); Walach, Wieslaw, 53842 Troisdorf (DE)
(74) Vertreter: Rohmann, Michael, Dr.

(57) **Zusammenfassung**

Extrudiervorrichtung mit zumindest zwei Extruderschnecken (1,2) und Schneckenantrieb, wobei der Schneckenantrieb aus einem Antriebsgehäuse (3) und zumindest einem Antriebsmotor (8) mit Stator (9) und Rotor (10) besteht. Jede der beiden Extruderschnecken (1,2) weist eine Schneckenwelle (4,5) und einen an die Schneckenwelle (4,5) anschließenden, in das Antriebsgehäuse (3) zumindest teilweise einfassenden Anschlussabschnitt (6,7) auf. In dem Antriebsgehäuse (3) ist zumindest ein zylinderförmiger Stator (9) angeordnet, welcher Stator (9) einen zylinderförmigen Rotor (10) umgibt und wobei der Rotor (10) mit den Anschlussabschnitten (6,7) der beiden Extruderschnecken (1,2) verbunden ist.

## Beschreibung

Die Erfindung betrifft eine Extrudiervorrichtung mit zumindest zwei Extruderschnecken und Schneckenantrieb. - Die Erfindung betrifft insbesondere und nach bevorzugter Ausführungsform einen Doppelschneckenextruder, d. h. eine Extrudiervorrichtung mit zwei Extruderschnecken und zwei zugeordneten Schneckenwellen. Wenngleich ein Doppelschneckenextruder die bevorzugte Ausführungsform der Erfindung ist, können im Rahmen der erfindungsgemäßen Extrudiervorrichtung auch mehr als zwei Extruderschnecken vorgesehen sein. Die nachfolgenden Ausführungen zu den erfindungsgemäßen Ausführungsformen der Extrudiervorrichtung beziehen sich somit stets auch auf mehr als zwei Extruderschnecken.

Aus der Praxis ist es bekannt, zwei Extruderschnecken eines Doppelschneckenextruders mittels eines Antriebsmotors anzutreiben, wobei die Extruderschnecken über ein entsprechendes Getriebe mit dem Antriebsmotor verbunden sind. Aufgrund des zwischengeschalteten Getriebes baut der Doppelschneckenextruder relativ voluminös. Außerdem ist das Getriebe störanfällig und hinsichtlich der Wartung aufwendig.

Weiterhin sind aus der Praxis Doppelschneckenextruder bekannt, bei denen jede Extruderschnecke von einem separaten Antriebsmotor angetrieben wird. Auch hier ist jeder Antriebsmotor über ein entsprechendes Getriebe mit der zugeordneten Extruderschnecke gekoppelt. Zur Realisierung eines Synchronlaufes der beiden Extruderschnecken sind die beiden Getriebe entsprechend miteinander verbunden. Auch diese Vorrichtung zeichnet sich durch einen raumaufwendigen Aufbau aus und lässt im Hinblick auf die Funktionssicherheit des Synchronlaufes zu wünschen übrig. Fernerhin ist die Herstellung dieses bekannten Doppelschneckenextruders aufwendig und kostspielig.

Demgegenüber liegt der Erfindung das technische Problem zugrunde, eine Extrudiervorrichtung der eingangs genannten Art anzugeben, die sich durch einen einfachen und platzsparenden Aufbau auszeichnet und die nichtsdestoweniger insbesondere auch im Hinblick auf einen einwandfreien Synchronlauf der Extruderschnecken funktionssicher arbeitet.

Zur Lösung dieses technischen Problems lehrt die Erfindung eine Extrudiervorrichtung mit zumindest zwei Extruderschnecken und Schneckenantrieb,
wobei der Schneckenantrieb aus einem Antriebsgehäuse und zumindest einem Antriebsmotor mit Stator und Rotor besteht,
wobei jede der beiden Extruderschnecken eine Schneckenwelle und einen an die Schneckenwelle anschließenden, in das Antriebsgehäuse zumindest teilweise einfassenden Anschlussabschnitt aufweist,
wobei in dem Antriebsgehäuse zumindest ein zylinderförmiger Stator angeordnet ist, welcher Stator einen zylinderförmigen Rotor umgibt
und wobei der Rotor mit den Anschlussabschnitten der beiden Extruderschnecken verbunden ist. - Wie oben bereits dargelegt handelt es sich bei der Extrudiervorrichtung nach sehr bevorzugter Ausführungsform der Erfindung um einen Doppelschneckenextruder.

Nach einer bevorzugten Ausführungsform der Erfindung ist in dem Antriebsgehäuse ein zylinderförmiger Stator angeordnet, welcher zylinderförmige Stator einen einzigen zylinderförmigen Rotor umgibt, wobei der einzige Rotor mit beiden Anschlussabschnitten der beiden Extruderschnecken verbunden ist. Es liegt dabei im Rahmen der Erfindung, dass der Rotor mit zumindest einem Anschlussabschnitt einer Exruderschnecke unmittelbar, d. h. ohne Zwischenschaltung weiterer Elemente verbunden ist.

Nach sehr bevorzugter Ausführungsform der Erfindung weist der einzige Rotor eine Innenverzahnung auf und weist jeder Anschlussabschnitt eine Außenverzahnung auf. Bei dieser Ausführungsform kämmt die Außenverzahnung zumindest eines Anschlussabschnittes unmittelbar mit der Innenverzahnung des Rotors. - Nach einer ersten Ausführungsform der Erfindung kämmen die Außenverzahnungen beider Anschlussabschnitte unmittelbar mit der Innenverzahnung des Rotors. Bei dieser Ausführungsform kann problemlos ein Gleichlauf der beiden Schneckenwellen bzw. der beiden Extruderschnecken verwirklicht werden. - Nach einer zweiten Ausführungsform der Erfindung kämmt lediglich die Außenverzahnung eines einzigen Anschlussabschnittes unmittelbar mit der Innenverzahnung des Rotors und ist die Außenverzahnung des zweiten Anschlussabschnittes über zumindest ein Zwischenzahnrad an die Innenverzahnung des Rotors angeschlossen. Das Zwischenzahnrad kämmt also unmittelbar mit der Innenverzahnung des Rotors und die Außenverzahnung des zweiten Anschlussabschnittes kämmt mit der Außenverzahnung des Zwischenzahnrades. Es liegt im Rahmen der Erfindung, dass bei dieser Ausführungsform lediglich ein einziges Zwischenzahnrad vorgesehen ist. Bei dieser letztgenannten Ausführungsform kann auf einfache Weise ein Gegenlauf der beiden Schneckenwellen bzw. der beiden Extruderschnecken realisiert werden.

Nach einer anderen bevorzugten Ausführungsform der Erfindung sind in dem Antriebsgehäuse zwei zylinderförmige Statoren vorgesehen, wobei jeder Stator einen zylinderförmigen Rotor umgibt und wobei jeder zylinderförmige Rotor jeweils mit dem Anschlussabschnitt einer der beiden Schneckenwellen verbunden ist. - Nach einer ersten Ausführungsform ist dabei jeder zylinderförmige Rotor unmittelbar, d. h. ohne Zwischenschaltung von Zwischenelementen, mit dem Anschlussabschnitt der zugeordneten Schneckenwelle verbunden. Bei dieser ersten Ausführungsform sind zweckmäßigerweise die beiden Antriebsmotoren mit ihrem jeweiligen Rotor und Stator bezüglich der Längsrichtung der Schneckenwelle hintereinander bzw. versetzt zueinander angeordnet. Dementsprechend ist dann der Anschlussabschnitt der einen Extruderschnecke länger ausgebildet als der Anschlussabschnitt der zweiten Extruderschnecke. - Nach einer zweiten Ausführungsform ist zumindest ein zylinderförmiger Rotor über zumindest ein Zwischenelement mit dem Anschlussabschnitt der zugeordneten Schneckenwelle verbunden. Vorzugsweise sind beide zylinderförmige Rotoren über jeweils ein Zwischenelement mit dem Anschlussabschnitt der zugeordneten Schneckenwelle verbunden. Zweckmäßigerweise ist dabei ein zylinderförmiger Rotor unmittelbar mit einer Zwischenwelle verbunden und die Zwischenwelle ist ihrerseits mit dem Anschlussabschnitt der zugeordneten Schneckenwelle verbunden. Vorzugsweise weist dabei eine Zwischenwelle ein erstes Zahnrad auf, das mit einem zweiten Zahnrad kämmt, das auf dem jeweils zugeordneten Anschlussabschnitt angeordnet ist. Die entsprechenden Zahnverbindungen bzw. Zahnradverbindungen des ersten Antriebsmotors bzw. der ersten Extruderwelle und des zweiten Antriebsmotors bzw. der zweiten Extruderwelle sind dabei zweckmäßigerweise in Längsrichtung der Extruderwellen hintereinander bzw. versetzt zueinander im Antriebsgehäuse angeordnet. Auf diese Weise wird eine sehr platzsparende Anordnung verwirklicht. Mit der vorgenannten Ausführungsform ist sowohl ein Gleichlauf als auch ein Gegenlauf der Extruderwellen problemlos möglich und auch eine Umschaltung zwischen Gleichlauf und Gegenlauf ist auf einfache Weise realisierbar.

Der Erfindung liegt die Erkenntnis zugrunde, dass die erfindungsgemäße Extrudiervorrichtung einen einfachen Aufbau und vor allem einen verhältnismäßig wenig raumaufwendigen Aufbau aufweist. Sie benötigt daher in vorteilhafter Weise nur einen geringen Platzbedarf. Nichtsdestoweniger zeichnet sich die erfindungsgemäße Extrudiervorrichtung durch einwandfreie Funktionssicherheit aus und ein störungsfreier Synchronlauf der Extruderschnecken ist ohne weiteres verwirklichbar. Bei der erfindungsgemäßen Extrudiervorrichtung kann auf die Zwischenschaltung von aufwendigen Getrieben bzw. Verteilergetrieben vollständig verzichtet werden. Insoweit zeichnet sich die Extrudiervorrichtung auch durch eine einfache und kostengünstige Herstellung aus. Es entfallen zeitaufwendige Wartungsarbeiten, die bei den aus dem Stand der Technik bekannten und mit Getrieben arbeitenden Extrudiervorrichtungen erforderlich sind.

Nachfolgend wird die Erfindung anhand einer lediglich ein Ausführungsbeispiel darstellenden Zeichnung näher erläutert. Es zeigen in schematischer Darstellung:
- Fig. 1: einen Teil einer erfindungsgemäßen Extrudiervorrichtung,
- Fig. 2: einen Schnitt A-A durch den Gegenstand nach Fig. 1,
- Fig. 3: den Gegenstand gemäß Fig. 2 in einer anderen Ausführungsform,
- Fig. 4: eine zweite Ausführungsform des Gegenstandes nach Fig. 1 und
- Fig. 5: den Gegenstand gemäß Fig. 1 in einer dritten Ausführungsform.

Die Figuren zeigen einen Teil einer Extrudiervorrichtung bzw. eines Doppelschneckenextruders mit zwei Extruderschnecken 1, 2 und Schneckenantrieb. Der Schneckenantrieb weist zunächst ein Antriebsgehäuse 3 auf und jede der beiden Extruderschnecken 1, 2 hat eine Schneckenwelle 4, 5 und einen an die Schneckenwellen 4, 5 jeweils anschließenden und in das Antriebsgehäuse 3 einfassenden Anschlussabschnitt 6, 7.

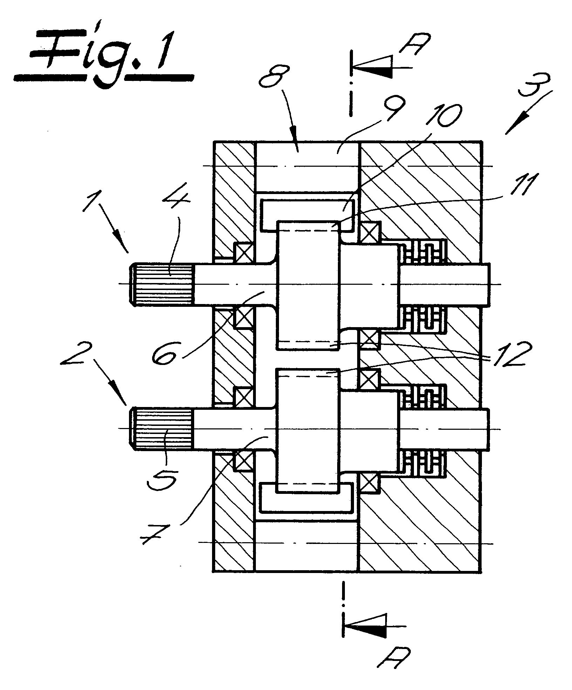

Bei der Ausführungsform nach den Figuren 1 bis 3 besteht der Schneckenantrieb aus dem Antriebsgehäuse 3 und aus lediglich einem einzigen Antriebsmotor 8 mit einem zylinderförmigen Stator 9, der einen zylinderförmigen Rotor 10 umgibt. Der Rotor 10 weist eine Innenverzahnung 11 auf und jeder Anschlussabschnitt 6, 7 weist eine Außenverzahnung 12 auf.

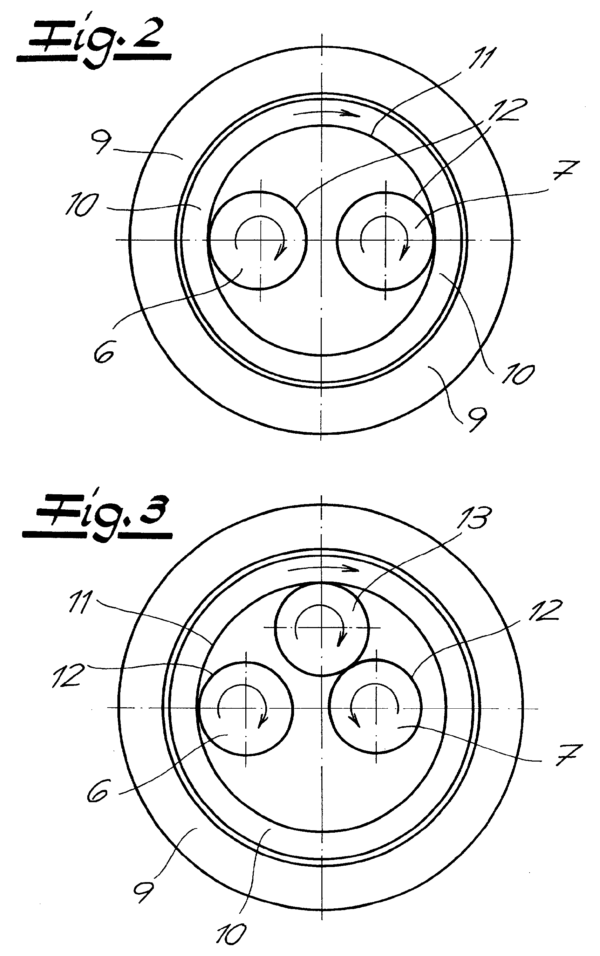

Im Ausführungsbeispiel nach den Fig. 1 und 2 greifen die Außenverzahnungen 12 der beiden Anschlussabschnitte 6, 7 unmittelbar in die Innenverzahnung 11 des Rotors 10 ein bzw. kämmen diese Außenverzahnungen 12 unmittelbar mit der Innenverzahnung 11. Bei einer Drehung des Rotors 10 werden somit die mit dem Rotor wechselwirkenden Anschlussabschnitte 6, 7 bzw. deren zugeordnete Schneckenwellen 4, 5 in eine gleichsinnige Drehbewegung versetzt. Das ist in der Fig. 2 veranschaulicht.

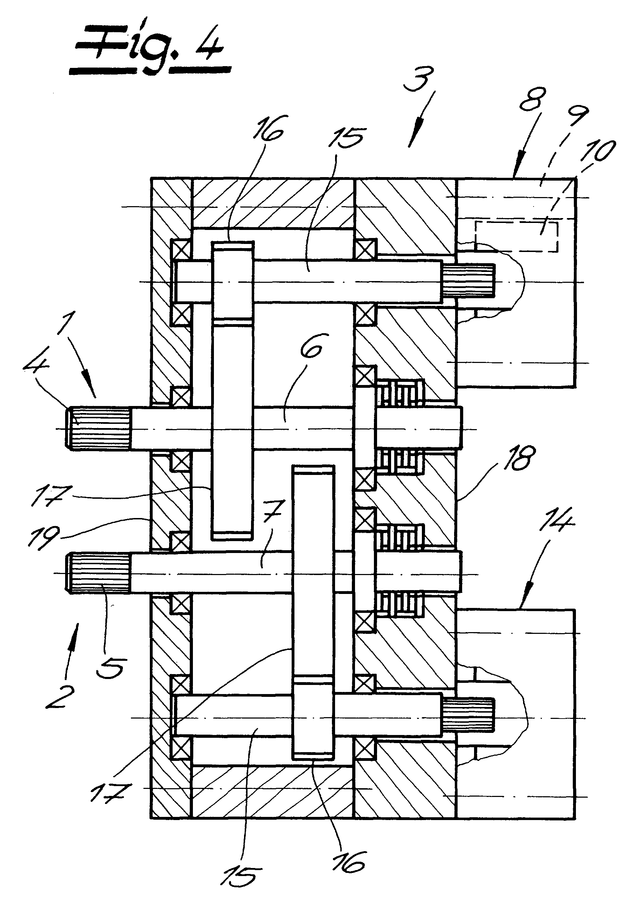

Im Ausführungsbeispiel nach Fig. 3 kämmt lediglich die Außenverzahnung 12 des ersten Anschlussabschnittes 6 unmittelbar mit der Innenverzahnung 11 des Rotors 10. Die Außenverzahnung 12 des zweiten Anschlussabschnittes 7 ist dagegen über ein Zwischenzahnrad 13 an die Innenverzahnung 11 des Rotors 10 angeschlossen. Auf diese Weise wird eine gegenläufige Drehbewegung der Anschlussabschnitte 6, 7 bzw. ihrer zugeordneten Schneckenwellen 4, 5 verwirklicht. Das ist in der Fig. 3 durch entsprechende Pfeile angedeutet worden.

Bei dem Ausführungsbeispiel nach Fig. 4 besteht der Schneckenantrieb aus dem Antriebsgehäuse 3 und zwei Antriebsmotoren 8, 14, die jeweils einen zylinderförmigen Stator 9 und einen zylinderförmigen Rotor 10 aufweisen. Es versteht sich, dass auch hier der zylinderförmige Stator 9 den zylinderförmigen Rotor 10 jeweils umgibt. An jeden Rotor 10 ist eine einzige Zwischenwelle 15 unmittelbar angeschlossen. Auf jeder Zwischenwelle 15 ist ein erstes Zahnrad 16 vorgesehen, welches erste Zahnrad 16 jeweils mit einem zweiten Zahnrad 17 (Außenverzahnung) des zugeordneten Anschlussabschnittes 6, 7 kämmt. Der Rotor 10 ist also bei diesem Ausführungsbeispiel über eine Zwischenwelle 15 mit dem zugeordneten Anschlussabschnitt 6, 7 verbunden. Bei dieser Ausführungsform ist sowohl ein Gleichlauf- als auch ein Gegenlaufbetrieb der beiden Schneckenwellen 4, 5 möglich. Vorzugsweise und im Ausführungsbeispiel sind die beiden zweiten Zahnräder 17 der Anschlussabschnitte 6, 7 in Bezug auf die Längsrichtung der Schneckenwellen 4, 5 hintereinander bzw. versetzt zueinander angeordnet. In der Projektion auf den hinteren Lagerdeckel 18 oder auf den vorderen Lagerdeckel 19 des Antriebsgehäuses 3 sind die beiden zweiten Zahnräder 17 einander überlappend orientiert. Fig. 4 zeigt, dass auf diese Weise eine sehr platzsparende Bauweise der Extrudiervorrichtung erzielt wird.

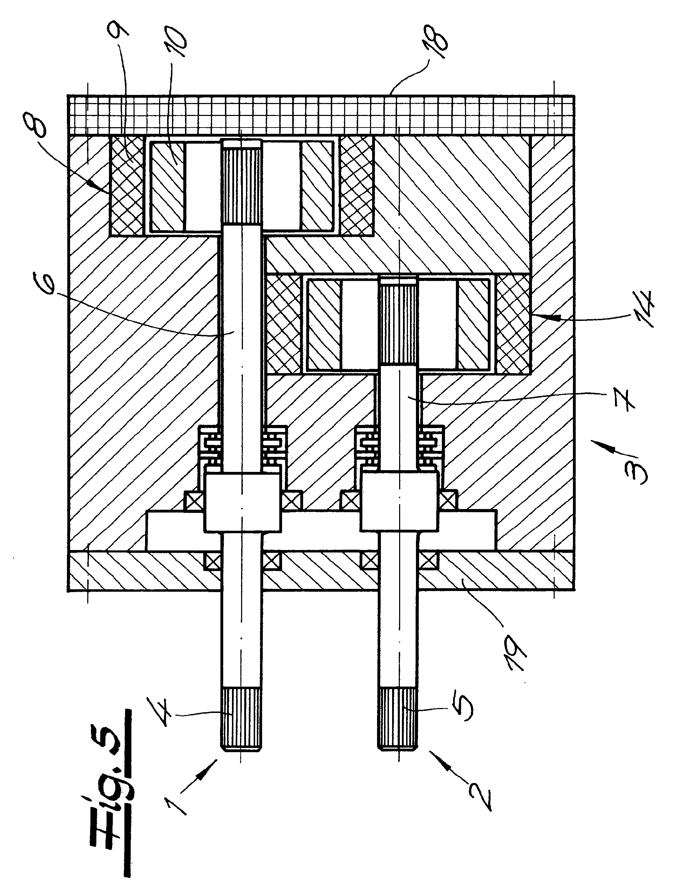

Im Ausführungsbeispiel nach Fig. 5 besteht der Schneckenantrieb ebenfalls aus dem Antriebsgehäuse 3 und aus zwei Antriebsmotoren 8, 14, die jeweils eine Schneckenwelle 4, 5 antreiben. Hier ist jeder zylinderförmige Rotor 10 unmittelbar mit dem Anschlussabschnitt 6, 7 der zugeordneten Schneckenwelle 4, 5 verbunden. Die Antriebsmotoren 8, 14 sind bezüglich der Längsrichtung der Anschlussabschnitte 6, 7 bzw. der Schneckenwellen 4, 5 hintereinander angeordnet. Aus diesem Grunde ist der Anschlussabschnitt 6 der ersten Extruderschnecke 1 länger ausgeführt als der Anschlussabschnitt 7 der zweiten Extruderschnecke 2. In Projektion auf den hinteren Lagerdeckel 18 bzw. auf den vorderen Lagerdeckel 19 des Antriebsgehäuses 3 überlappen die Antriebsmotoren 8, 14 bzw. ihre Statoren und Rotoren 10. Auch auf diese Weise wird eine sehr platzsparende Extrudiervorrichtung verwirklicht. Mit der Extrudiervorrichtung nach Fig. 5 ist sowohl ein Gleichlauf- als auch Gegenlaufbetrieb der beiden Schneckenwellen 4, 5 möglich.

## Patentansprüche

1. Extrudiervorrichtung mit zumindest zwei Extruderschnecken (1, 2) und Schneckenantrieb,
wobei der Schneckenantrieb aus einem Antriebsgehäuse (3) und zumindest einem Antriebsmotor (8, 14) mit Stator (9) und Rotor (10) besteht,
wobei jede der beiden Extruderschnecken (1, 2) eine Schneckenwelle (4, 5) und einen an die Schneckenwelle (4, 5) anschließenden, in das Antriebsgehäuse (3) zumindest teilweise einfassenden Anschlussabschnitt (6, 7) aufweist,
wobei in dem Antriebsgehäuse (3) zumindest ein zylinderförmiger Stator (9) angeordnet ist, welcher Stator (9) einen zylinderförmigen Rotor (10) umgibt
und wobei der Rotor (10) mit den Anschlussabschnitten (6, 7) der beiden Extruderschnecken (1, 2) verbunden ist.

2. Extrudiervorrichtung nach Anspruch 1, wobei in dem Antriebsgehäuse (3) ein zylinderförmiger Stator (9) angeordnet ist, welcher Stator (9) einen einzigen zylinderförmigen Rotor (10) umgibt und wobei der einzige Rotor (10) mit beiden Anschlussabschnitten (6, 7) der beiden Extruderschnecken (1, 2) verbunden ist.

3. Extrudiervorrichtung nach Anspruch 2, wobei der einzige Rotor (10) eine Innenverzahnung (11) aufweist, wobei jeder Anschlussabschnitt (6, 7) eine Außenverzahnung (12) aufweist und wobei die Außenverzahnung (12) zumindest eines Anschlussabschnittes (6, 7) unmittelbar mit der Innenverzahnung (11) des Rotors (10) kämmt.

4. Extrudiervorrichtung nach Anspruch 3, wobei die Außenverzahnungen (12) beider Anschlussabschnitte (6, 7) unmittelbar mit der Innenverzahnung (11) des Rotors (10) kämmen.

5. Extrudiervorrichtung nach Anspruch 3, wobei die Außenverzahnung (12) eines Anschlussabschnittes (6, 7) unmittelbar mit der Innenverzahnung (11) des Rotors (10) kämmt und wobei die Außenverzahnung (12) des zweiten Anschlussabschnittes (6, 7) über zumindest ein Zwischenzahnrad (13) an die Innenverzahnung (11) des Rotors (10) angeschlossen ist.

6. Extrudiervorrichtung nach Anspruch 1, wobei an dem Antriebsgehäuse (3) zwei zylinderförmige Statoren (9) vorgesehen sind, wobei jeder Stator (9) einen zylinderförmigen Rotor (10) umgibt und wobei jeder zylinderförmige Rotor (10) jeweils mit dem Anschlussabschnitt (6, 7) einer der beiden Schneckenwellen (4, 5) verbunden ist.

7. Extrudiervorrichtung nach Anspruch 6, wobei jeder zylinderförmige Rotor (10) unmittelbar mit dem Anschlussabschnitt (6, 7) der zugeordneten Schneckenwelle (4, 5) verbunden ist.

8. Extrudiervorrichtung nach Anspruch 6, wobei zumindest ein zylinderförmiger Rotor (10) über zumindest ein Zwischenelement mit dem Anschlussabschnitt (6, 7) der zugeordneten Schneckenwelle (4, 5) verbunden ist.

9. Extrudiervorrichtung nach Anspruch 8, wobei der zumindest eine zylinderförmige Rotor (10) an eine Zwischenwelle (15) angeschlossen ist, welche Zwischenwelle (15) mit dem Anschlussabschnitt (6, 7) der zugeordneten Schneckenwelle (4, 5) verbunden ist.

10. Extrudiervorrichtung nach Anspruch 9, wobei beide zylinderförmige Rotoren (10) jeweils an eine Zwischenwelle (15) angeschlossen sind, welche Zwischenwelle (15) mit dem Anschlussabschnitt (6, 7) der zugeordneten Schneckenwelle (4, 5) verbunden ist.
